(19) Europäisches Patentamt

European Patent Office

Office européen des brevets

(11) **EP 1 659 573 A2**

(12) **EUROPÄISCHE PATENTANMELDUNG**

(43) Veröffentlichungstag:
    24.05.2006 Patentblatt 2006/21

(51) Int Cl.:
    *G10L 17/00* *(2006.01)*    *G10L 15/26* *(2006.01)*

(21) Anmeldenummer: 05020312.4

(22) Anmeldetag: 17.09.2005

(84) Benannte Vertragsstaaten:
    AT BE BG CH CY CZ DE DK EE ES FI FR GB GR
    HU IE IS IT LI LT LU LV MC NL PL PT RO SE SI
    SK TR
    Benannte Erstreckungsstaaten:
    AL BA HR MK YU

(30) Priorität: 18.11.2004 DE 102004056165

(71) Anmelder: **Deutsche Telekom AG**
    **53113 Bonn (DE)**

(72) Erfinder:
    • **Oberle, Frank**
      **10623 Berlin (DE)**
    • **Burkhardt, Felix**
      **10587 Berlin (DE)**

(54) **Verfahren und Anordnung zur Bewertung des Emotionszustands einer Person anhand sprachlicher Äußerungen**

(57)    Die Erfindung betrifft ein Verfahren und eine Anordnung zur Bewertung des emotionalen Zustands einer Person anhand sprachlicher Äußerungen der betreffenden Person.

Aufgabe ist es, eine Lösung anzugeben, die es ermöglicht, robuste und zuverlässige Aussagen über den emotionalen Zustand einer Person anhand sprachlicher Äußerungen der betreffenden Person zu gewinnen.

Erfindungsgemäß wird das Sprachsignal dazu parallel zu seiner Verarbeitung im Emotionserkenner einer Spracherkennungseinheit zugeführt. Hier erfolgt eine semantische Sprachanalyse, deren Ergebnis ein ein- oder mehrkanaliger Ausdruck ist, der einen semantischen Status des Sprachsignals beschreibt. Dieser Ausdruck umfasst einen Kanal, welcher den Inhalt einer semantischen Entsprechung des Sprachsignals in Bezug auf eine an emotionalen Formulierungen orientierte, im System hinterlegte Grammatik beschreibt. Dieser, auch als Slot bezeichnete Kanal wird schließlich mit dem für das gleiche Sprachsignal festgelegten emotionalen Status unter Einbeziehung eines ersten Gewichtskoeffizienten in einer Logik verknüpft. Ergebnis dieser Verknüpfung ist ein den emotionalen Zustand der Person repräsentierender Emotionsindikator.

EP 1 659 573 A2

## Beschreibung

Die Erfindung betrifft ein Verfahren und eine Anordnung zur Bewertung des emotionalen Zustands einer Person anhand sprachlicher Äußerungen der betreffenden Person. Im Hinblick auf ihre praktischen Umsetzungsmöglichkeiten bezieht sich die Erfindung insbesondere, aber nicht ausschließlich, auf die Bewertung des emotionalen Zustands des Nutzers eines sprachgesteuerten automatischen Dialogsystems.

Verfahren zur Feststellung beziehungsweise Bewertung emotionaler Zustände von Personen sind zu unterschiedlichsten Zwecken seit längerem bekannt. Beispielsweise basieren Lügendetektoren auf der Bewertung des emotionalen Zustands der mit ihnen überprüften Probanden. Dabei wird der emotionale Zustand beispielsweise über die Messung des Hautwiderstandes und seiner Veränderung in Abhängigkeit der Erregung der überprüften Person bestimmt.

Eine andere Möglichkeit der Emotionsbewertung ist durch die Analyse sprachlicher Äußerungen einer Person gegeben. Eine auf dem letztgenannten Prinzip basierende Lösung wird durch die WO 99/31653 A1 beschrieben. Die Schrift offenbart eine Anordnung und ein Verfahren zur Detektion von Emotionen, deren zentrales Element eine Stimmanalyse ist. Mittels der stimmbezogenen, nicht aber sprachbezogenen Analyse wird gemäß der dargestellten Lösung eine Intonationsinformation gewonnen, welche es ermöglicht, ein den emotionalen Zustand der jeweiligen Person repräsentierendes Ausgangssignal zu generieren. Entsprechend der Druckschrift bezieht sich die dargestellte Lösung vorzugsweise auf die Anwendung bei Lügendetektoren. Der sprachliche Inhalt von Äußerungen der hinsichtlich ihres Emotionszustandes bewerteten Person bleibt bei dieser Lösung jedoch außer Betracht. Insoweit ist sie in dieser Form und für sich betrachtet für den Einsatz in automatischen Dialogsystemen nicht geeignet.

Ebenfalls bekannt sind Verfahren und Systeme zur semantischen und/oder grammatikalischen Sprachanalyse. Ein entsprechendes Verfahren wird beispielsweise durch die DE 101 227 56 A1 offenbart. Systeme der genannten Art weisen inzwischen eine Zuverlässigkeit und eine Treffsicherheit auf, welche ihren Einsatz für einige Anwendungen rechtfertigen, die aber für viele denkbare Anwendungen gegenwärtig noch nicht hinreichend sind. Die mit ihnen realisierten sprachgesteuerten Dialogsysteme sind zudem in ihren Abläufen und Verzweigungsmöglichkeiten bislang relativ starr. Insbesondere werden Schwierigkeiten, auf die der Nutzer bei der Benutzung der Systeme stößt und welche ihn gegebenenfalls verunsichern, so dass er hierdurch emotional negativ beeinflusst wird, im Grunde nicht berücksichtigt.

Aufgabe der Erfindung ist es daher, eine Lösung anzugeben, die es insbesondere, aber nicht ausschließlich, im Hinblick auf die Nutzung für eine flexible und komfortable Sprachsteuerung automatischer Dialogsysteme ermöglicht, robuste und zuverlässige Aussagen über den emotionalen Zustand einer Person anhand sprachlicher Äußerungen der betreffenden Person zu gewinnen. Gemäß einer bevorzugten Ausbildung zur Nutzung in Dialogsystemen soll die zu schaffende Lösung auch den jeweiligen Verlauf eines Dialogs bei der Beurteilung des emotionalen Zustands der dialogführenden Person berücksichtigen.

Die Aufgabe wird durch ein Verfahren mit den Merkmalen des Hauptanspruchs gelöst. Eine die Aufgabe lösende Anordnung wird durch den ersten vorrichtungsbezogenen Anspruch charakterisiert. Vorteilhafte Ausbildungen beziehungsweise Weiterbildungen der Erfindung sind durch die jeweiligen Unteransprüche gegeben.

Gemäß dem vorgeschlagenen Verfahren zur Bewertung des emotionalen Zustands einer Person anhand ihrer sprachlichen Äußerungen wird das aus einer entsprechenden Äußerung resultierende Sprachsignal einem Ermotionserkenner zugeführt. Durch diesen wird das Sprachsignal, in an sich bekannter Weise aufgrund prosodischer Merkmale klassifiziert. Dabei wird das Signal nach bekannten Verfahren, wie sie beispielsweise eingangs erwähnt wurden, im Hinblick auf die Intonation, die Stimmhöhe beziehungsweise das Frequenzmuster und/oder ein eventuell vorhandenes Tembre bewertet. Im Ergebnis dieser Bewertung wird für das jeweilige Sprachsignal ein emotionaler Status festgelegt, der einem Wert innerhalb eines für die prosodische Klassifizierung festgelegten Wertebereichs entspricht. Erfindungsgemäß wird das Sprachsignal aber parallel zu seiner Verarbeitung im Emotionserkenner einer Spracherkennungseinheit zugeführt. Hier erfolgt nach einer Signalvorverarbeitung und einer Merkmalsextraktion, eine semantische Sprachanalyse, deren Ergebnis ein ein-oder mehrkanaliger Ausdruck ist, der einen semantischen Status des Sprachsignals beschreibt. Der besagte Ausdruck umfasst erfindungsgemäß einen Kanal, welcher den Inhalt einer semantischen Entsprechung des Sprachsignals in Bezug auf eine an emotionalen Formulierungen orientierte Grammatik beschreibt. Dieser, hier auch als Slot bezeichnete Kanal wird schließlich mit dem für das gleiche Sprachsignal festgelegten emotionalen Status unter Einbeziehung eines ersten Gewichtskoeffizienten in einer Logik verknüpft. Ergebnis dieser Verknüpfung ist dann ein den emotionalen Zustand der Person repräsentierender Emotionsindikator, der von einer nach dem dargestellten Verfahren arbeitenden Anordnung zurückgegeben wird und für eine Weiterverarbeitung zur Verfügung steht.

An dieser Stelle sei angemerkt, dass Gegenstand der Erfindung weder die Vorgehensweise zur Klassifikation eines Sprachsignals anhand prosodischer Merkmale noch die semantische Sprachanalyse als solches ist. Für beide Aspekte einer Bewertung von Sprachsignalen, sind, jeweils für sich betrachtet, Verfahren bekannt und, wie eingangs bereits dargelegt, beschrieben worden. Vielmehr ist es die Idee der Erfindung, eine zuverlässigere und insoweit belastbarere Aussage über den emotionalen Zustand einer Person dadurch zu erhalten, dass sprachliche Äußerungen ergänzend zur prosodischen Analyse einer semantischen Sprachanalyse unterzogen werden, wobei dieser Analyse, erfindungsgemäß und bisher bekannte Sprachanalysesysteme modifizierend, eine Grammatik beziehungsweise ein Sprachraum zugrunde gelegt wird, die beziehungsweise der sich an Formulierungen orientiert, wie sie von emotional erregten Personen gebraucht werden oder zu erwarten sind. Die entsprechenden Formulierungen selbst können dabei durchaus auf empirischer Grundlage gewonnen werden. Sie können sowohl Formulierungen beziehungsweise Äußerungen umfassen, wie sie bezogen auf die jeweilige Anwendung im Falle einer emotionalen Erregung zu erwarten sind, wie auch allgemein, also losgelöst von der speziellen Applikation, im Zustand der emotionellen Erregung einer Person zu erwartende Formulierungen. Eine auf der Grundlage dieser Überlegungen erstellte Grammatik ergänzt dabei in einem Sprachanalysemodul beziehungsweise einer semantischen Sprachanalyseeinheit die entsprechende anwendungsbezogene Grammatik.

In einer bevorzugten Ausbildung der Erfindung, welche der Tatsache Rechnung trägt, dass in vielen Anwendungsfällen nicht nur der emotionale Zustand von Interesse sein wird, ist das Verfahrensregime so gestaltet, dass neben der an emotionalen Formulierungen orientierten Grammatik eine anwendungsspezifische Grammatik in die Sprachanalyse einbezogen wird. Im Ergebnis der Sprachanalyse wird dabei ein mehrkanaliger Ausdruck für den semantischen Status des Sprachsignals erhalten, welcher mindestens einen Kanal umfasst, der den Inhalt einer semantischen Entsprechung des Sprachsignals in Bezug auf diese anwendungsspezifische, aber emotionsunabhängige Grammatik beschreibt und ebenfalls in die Verknüpfung mit dem im Ergebnis der prosodischen Klassifizierung gewonnenen emotionalen Status einbezogen wird. Entsprechend einer bevorzugten Weiterbildung des erfindungsgemäßen Verfahrens, welche sich auf eine Umsetzung für ein automatisches Sprachdialogsystem bezieht, wird in die ermittlung des Emotionsindikators der bisherige Verlauf eines geführten Dialogs mit einbezogen, indem der Emotionsindikator für den aktuellen Dialogschritt mit dem, durch die Einbeziehung eines zweiten Gewichtskoeffizienten gedämpften Emotionsindikator des vorhergehenden Dialogschritts verknüpft wird.

Das Verfahren wird vorzugsweise so implementiert, dass der im Emotionserkenner für den emotionalen Status festgelegte Wert sowie die in den einzelnen Kanälen als Ergebnis der Sprachanalyse an die Verknüpfungseinheit übergebenen Werte und die Gewichtskoeffizienten jeweils einen Wert zwischen 0 und 1 annehmen. Für eine praxisgerechte Umsetzung des Verfahrens, welche sich an der Bereitstellung eines im Rahmen übergeordneter Systeme/Applikationen weiterzuverarbeitenden Emotionsindikators orientiert, wird der Emotionsindikator außerdem durch einen Schwellwertvergleich diskretisiert. Die Diskretisierung erfolgt vorzugsweise so, dass dabei ein Emotionsindikator gebildet wird, durch welchen hinsichtlich des emotionalen Zustands einer bewerteten Person zwischen den 4 Zuständen "nicht emotional", schwach emotional", "emotional" und "stark emotional" unterschieden werden kann. Die semantische Sprachanalyse geschieht vorzugsweise durch Einbeziehung akustischer Modelle, eines Wörterbuchs sowie der anwendungsspezifischen Grammatik und der an emotionalen Formulierungen orientierten Grammatik.

Die vorgeschlagene Anordnung zur Bewertung des emotionalen Zustands einer Person anhand ihrer sprachlichen Äußerungen, welche Teil eines hard- und/oder softwarebasierten Systems ist umfasst zumindest einen Emotionserkenner, in dem das zu bewertende Sprachsignal auf der Basis einer prosodischen Analyse klassifiziert wird. Zu diesem parallel ist erfindungsgemäß mindestens eine Sprachanalyseeinheit angeordnet ist, welche zur Sprachanalyse sowohl auf eine Datenbank mit einer anwendungsbezogenen Grammatik als auch auf eine Datenbank mit einer an emotionalen Formulierungen orientierten Grammatik zugreift. Der Parallelschaltung aus Emotionserkenner und Sprachanalyseeinheit ist weiterhin eine Logik nachgeschaltet, in welcher die Ergebnisse des Emotionserkenners und der Sprachanalyseeinheit zu einem den emotionalen Zustand der Person repräsentierenden Emotionsindikator verknüpft werden. In einer bevorzugten Ausgestaltung umfasst die Anordnung zur Diskretisierung des aus der Verknüpfung der Ergebnisse des Emotionserkenners und der Sprachanalyseeinheit erhaltenen Emotionsindikators außerdem einen, der Verknüpfungslogik nachgeschalteten Schwellwertvergleicher. Als Teil eines automatischen Sprachdialogsystems wird sie durch Einheiten zur Spracheingabe und zur Ausgabe eines Systemprompts komplettiert, wobei die Einheit oder Einheiten zur Ausgabe des Systemprompts mittels einer weiterhin vorgesehenen Steuereinheit unter anderem in Abhängigkeit des durch die Anordnung für einen Benutzer erkannten emotionalen Zustands angesteuert werden.

Sofern die Anordnung in ihrer Auslegung für ein Sprachdialogsystem so gestaltet ist, dass auch die Dialoghistorie, also der bisherige Verlauf des Dialogs berücksichtigt wird, ist eine Speichereinheit zur Speicherung eines in einem oder mehreren vorhergehenden Dialogschritten gewonnenen Emotionsindikators vorgesehen. Dabei besteht zwischen dieser Speichereinheit und der Verknüpfungslogik eine die Einbeziehung des Speicherinhalts in die Verknüpfung zwischen den Ergebnissen des Emotionserkenners und der Sprachanalyseeinheit ermöglichende Wirkverbindung. Die Sprachanalyseeinheit umfasst, bei einer für den Einsatz in Sprachdialogsystemen vorgesehenen Ausbildung, Datenbanken, in denen akustische Modelle, mindestens ein Wörterbuch, eine anwendungsspezifische Grammatik und eine an emotionalen Formulierungen orientierte Grammatik hinterlegt sind.

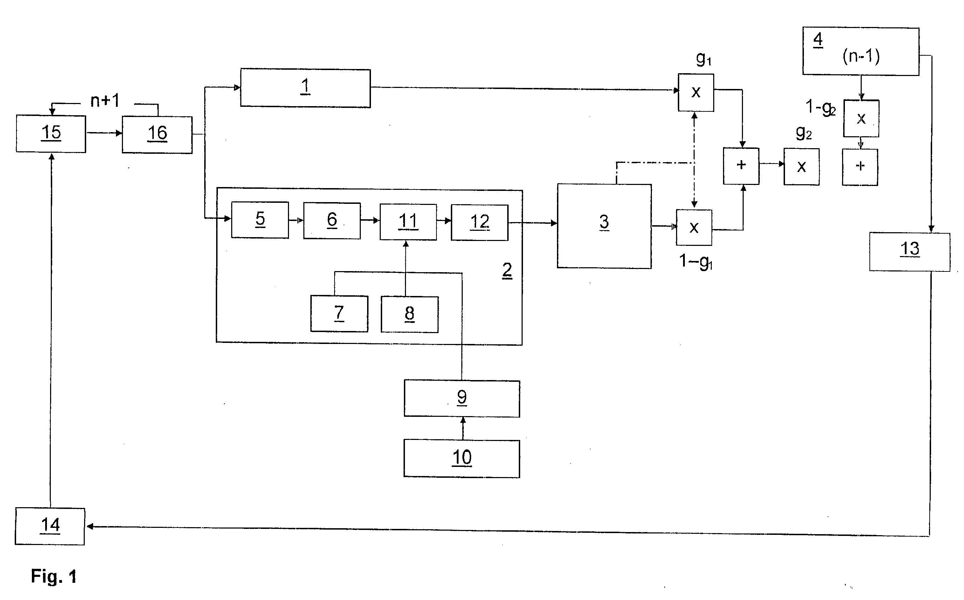

Die Erfindung soll nachfolgend anhand des in der Fig. 1 gezeigten Schemas in der Art eines Ausführungsbeispiels nochmals näher erläutert werden. Das Schema der Fig. 1 zeigt beispielhaft die Abläufe einer unter Nutzung der Erfindung ausgeführten automatischen Dialogsteuerung, welche gegebenenfalls Teil einer umfassenderen Applikation ist.

Zum Beginn eines Dialogs oder zu dessen Fortsetzung wird durch die Steuereinheit 13 ermittelt, welches der aktuell durchzuführende Dialogschritt ist und in Abhängigkeit davon für den Nutzer des Systems ein entsprechender Systemprompt 14 ausgegeben. Im Falle des Dialogbeginns handelt es sich dabei beispielsweise um einen "Willkommen-Bildschirm". An dieser Stelle sei jedoch darauf hingewiesen, dass es im Hinblick auf die Umsetzung der Erfindung völlig unerheblich ist, ob es sich bei diesem Systemprompt 14 um eine visuelle Ausgabe, eine akustische Ausgabe, eine Kombination beider Formen oder ein Systemsignal in einer beliebigen anderen denkbaren Form handelt. Lediglich bei dem vom Nutzer zu führenden Teil des Dialogs handelt es sich im Zusammenhang mit der Erfindung in jedem Falle um akustische Sprachsignale. Als Reaktion auf den aktuell vom System ausgegebenen Prompt 14 wird demzufolge durch das Dialogsystem eine Spracheingabe 15 von dem Benutzer erwartet.

Eine entsprechende sprachliche Äußerung 15 des Benutzers wird gemäß der Erfindung als Sprachsignal parallel sowohl dem Emotionserkenner 1 als auch der Spracherkennungseinheit 2 zugeführt. In dem Emotionserkenner 1 erfolgt eine Klassifizierung des Sprachsignals auf der Grundlage prosodischer Merkmale, wie beispielsweise Intonation, Stimmhöhe, also Stimmfrequenz, oder Tembre. Das Ergebnis dieser nach bekannten Verfahrensweisen durchgeführten Klassifizierung ist ein diskreter Wert innerhalb eines für die prosodische Klassifizierung festgelegten Wertebereichs, welcher einen emotionalen Status für das klassifizierte Sprachsignal festlegt. Entsprechend dem hier erläuterten Beispiel handelt es sich dabei um einen Wert zwischen 0 und 1. Dieser Wert wird ausgangs des Emotionserkenners 1 an die Applikation zurückgegeben und von dieser mit dem Ergebnis der parallel dazu durchgeführten semantischen Analyse des Sprachsignals verknüpft.

In der Spracherkennungseinheit 2 wird das Sprachsignal entsprechend ebenfalls geläufigen Verfahren nach einer Signalvorverarbeitung 5 und einer Merkmalsextraktion 6 semantisch analysiert. Die semantische Analyse erfolgt mittels akustischer Modelle 8, eines Wörterbuchs 7 und einer anwendungsspezifischen, im System hinterlegten oder in ihrem Zugriff befindlichen Grammatik 9. Der Vergleicher 11 der Spracherkennungseinheit 2 überprüft dabei das Sprachsignal auf semantische Entsprechungen in Bezug auf die anwendungsspezifische Grammatik 9 und liefert das Ergebnis beziehungsweise die Inhalte dieser Entsprechungen in Form sogenannter Slots zurück. Dabei wird im Rahmen der anwendungsspezifischen Grammatik 9 für den jeweils aktuellen Dialogschritt ein Sprachraum formuliert und den einzelnen Formulierungen Rückgabewerte in Form der Slots zugeordnet. Im Rahmen eines auf diese Weise analysierten Satzes des Benutzers können dabei auch mehrere unterschiedliche Informationen in Form unterschiedlicher Slots zurückgegeben werden.

in erfindungswesentlicher Weise findet jedoch bei der semantischen Sprachanalyse neben der anwendungsspezifischen Grammatik 9 noch eine spezielle, zu dieser vorzugsweise als Subgrammatik hinterlegte Grammatik 10 Berücksichtigung, welche einen Sprachraum für emotional geprägte beziehungsweise behaftete Formulierungen festlegt. Das Ergebnis der sprachlichen Analyse ist somit ein mehrkanaliger beziehungsweise ein durch mehrere Slots charakterisierter Ausdruck für einen semantischen Status des Sprachsignals, der einen oder mehrere Kanäle umfasst, welche den Inhalt semantischer Entsprechungen des Sprachsignals in Bezug auf eine anwendungsspezifische aber emotionsunabhängige Grammatik 9 beschreiben und darüber hinaus aber einen Kanal aufweist, welcher den Inhalt einer semantischen Entsprechung des Sprachsignals in Bezug auf eine an emotionalen Formulierungen orientierte Grammatik 10 beschreibt.

Der dem Sprachsignal aufgrund der prosodischen Klassifizierung zugeordnete emotionale Status und die die Entsprechungen zu der Grammatik 9 und der Grammatik 10 abbildenden Kanäle des im Ergebnis der Sprachanalyse gewonnenen Ausdrucks werden schließlich unter Einbeziehung eines Gewichtskoeffizienten in der Logik 3 miteinander verknüpft. Sofern eine Berücksichtigung der Dialoghistorie nicht erfolgt, stellt das Ergebnis dieser Verknüpfung unmittelbar einen den emotionalen Zustand der Person repräsentierenden Emotionsindikator dar. In dem in der Fig. 1 dargestellten Beispiel wird jedoch dieser so genannte CompositScore nochmals unter Zugrundelegung der bisherigen Dialoghistorie gewichtet und erst das dabei entstehende Ergebnis als Emotionsindikator ausgegeben, wobei dieses Ergebnis in dem dargestellten Ausführungsbeispiel noch mittels eines der Logik 3 nachgeschalteten Schwellwertvergleichers diskretisiert wird, um eine festgelegte Anzahl von Emotionswerten zur Ableitung diskreter Dialogstrategienzu erhalten.

Wie bereits dargestellt, ist ein wesentliches Element der Erfindung darin zu sehen, dass innerhalb der Spracherkennungseinheit 2 nicht nur eine semantische Analyse bezogen auf eine anwendungsspezifische Grammatik, sondern vor allem eine semantische Analyse erfolgt, welche eine durch Emotionen beeinflusste Grammatik berücksichtigt. Die Spracherkennungseinheit ist daher gegenüber geläufigen Auslegungen entsprechender Einheiten, wie aus der Figur ersichtlich, um ein entsprechendes emotionales Grammatik-Modul 10 ergänzt. Dieses Grammatik-Modul 10 enthält entweder für den gesamten, im Rahmen der Applikation zu führenden Dialog oder für den jeweiligen Dialogschritt mögliche emotionale Formulierungen. Auch der Inhalt einer in Bezug auf diese Grammatik 10 im Sprachsignal festgestellten Entsprechung wird über einen Slot zurückgegeben, und zwar als ein sogenannter semantischer Emotionsscore (SemanticScore) mit einem Wert zwischen 0 und 1. Dabei wird Formulierungen, die einen eher schwachen emotionalen Erregungszustand wiedergeben, über den Slot SemanticScore ein semantischer Emotionsscore nahe 0 und solchen, die einen starken Erregungszustand anzeigen, ein semantischer Emotionsscore nahe 1 zugeordnet. Die Verknüpfung des aus der prosodischen Analyse gewonnenen emotionalen Status und des Ergebnisses der Sprachanalyse erfolgt in der Logik 3 gemäß der nachfolgend dargestellten Weise.

Die Logik 3 differenziert zwischen vier unterschiedlichen Ausgangszuständen der Spracherkennung:

1. Die Sprachanalyseeinheit hat keine Äußerung vom Nutzer registriert. In diesem Fall liegen weder ein prosodischer noch ein semantischer Emotionsscore vor. Der Emotionsindikator EmoScore, welcher ohne Berücksichtigung der Dialoghistorie, dem Ergebnis aus der Verknüpfung des aus der prosodischen Klassifikation erhaltenen emotionalen Status ProsodyScore und des semantischen Emotionsscore SemanticScore erhaltenen CompositeScore im aktuellen Dialogschritt n entspricht, wird auf null gesetzt:

$$EmoScore = CompositeScore(n) = 0$$

2. Die Sprachanalyseeinheit hat zwar eine Eingabe des Anrufers registriert, kann sie aber weder den in der Grammatik 10 noch den in der Grammatik 9 hinterlegten Formulierungen zuordnen. Aufgrund des Inhalts der Nutzeräußerung besteht somit keine Möglichkeit, Rückschlüsse auf die Emotionalität des Nutzers zu ziehen. In diesem Falle liegt nur ein Schätzwert für den prosodischen Score ProsodyScore vor, der auch für die Bildung des CompositeScore im aktuellen Dialogschritt n herangezogen wird:

$$EmoScore = CompositeScore(n) = ProsodyScore(n)$$

3. Die Sprachanalyseeinheit kann die Eingabe des Anrufers einer in der Grammatik 10 hinterlegten Formulierung zuordnen, die Nutzeräußerung enthält jedoch keine Formulierungen, die auf semantischer Seite Rückschlüsse auf eine Emotionalität des Nutzers erlauben. Das heißt es ist keine Entsprechung innerhalb Grammatik 9 feststellbar. Der CompositeScore im aktuellen Dialogschritt n wird aus dem prosodischen Score ProsodyScore, gedämpft um einen Faktor $g_1$ mit $0 <= g_1 <= 1$ gebildet:

$$EmoScore = CompositeScore(n) = g_1 \bullet ProsodyScore(n)$$

4. Die Sprachanalyseeinheit kann die Eingabe des Anrufers einer in der Grammatik 10 hinterlegten Formulierung zuordnen, im Slot "SemanticScore" wird ein Wert zwischen 0 und 1 zurückgeliefert, der Rückschlüsse auf eine Emotionalität des Nutzers erlaubt. Der CompositeScore im aktuellen Dialogschritt n wird aus dem prosodischen Score ProsodyScore , gedämpft um einen Faktor $g_1$ mit $0 <= g_1 <= 1$ und dem über die Spracherkennung zurückgelieferten SemanticScore, gedämpft um einen Faktor $(1 - g_1)$, gebildet:

$$CompositeScore(n) = g_1 \bullet ProsodyScore(n) + (1 - g_1) \bullet SemanticScore(n)$$

Zur Einbeziehung der Dialoghistorie wird der Emotionsindikator EmoScore im aktuellen Dialogschritt n aus dem um $g_2$ mit $0 <= g_2 <= 1$ gedämpften CompositeScore (7) im Dialogschritt n und dem um $(1 - g_2)$ gedämpften Emotionsindikator EmoScore aus dem vorausgegangen Dialogschritt gebildet.

$$EmoScore(n) = g_2 \times CompositeScore(n) + (1 - g_2) \times EmoScore(n - 1)$$

Die Gewichtskoeffizienten $g_1$ und $g_2$ sind konfigurierbar. Mit $g_1$ kann die Gewichtung der prosodischen Analyse im Vergleich zur semantischen Analyse eingestellt werden. Mit einem $g_1$ nahe 1 wird die prosodische Analyse im Vergleich zur semantischen Analyse entsprechend stark gewichtet, mit $g_1$ nahe 0 wird der Einfluss der semantischen Analyse stärker gewichtet. Mit $g_2$ nahe 1 wird die Dialoghistorie nur geringfügig bei der Berechnung des aktuellen Emotionsscore mitberücksichtigt, mit $g_2$ gegen 0 wird die Dialoghistorie entsprechend stärker berücksichtigt.

Zur Bildung der diskreten Emotionszustände "nicht emotional", schwach emotional", "emotional" und "stark emotional" wird der Emotionsscore EmoScore(n) in dem Schwellwertvergleicher 12 mit den Schwellwerten $sw_0$, $sw_1$ und $sw_2$ verglichen. Die diskretisierten Emotionszustände "nicht emotional", "schwach emotional", "emotional", "stark emotional" sind wiederum Eingangswerte für die Steuerung 13, die den nächsten Systemprompt 14 ermittelt.

Die vorstehende Darstellung rückt, im Hinblick auf den Gegenstand der Erfindung, die Bewertung des emotionalen Zustands einer das automatische Sprachdialogsystem nutzenden Person in den Vordergrund. Selbstverständlich werden aber auch, wie in der Zeichnung angedeutet und den vorstehenden Erläuterungen entnehmbar, die Ergebnisse der sich auf die anwendungsspezifische Grammatik 9 beziehenden semantischen Sprachanalyse der Steuerung 13 zur Ermittlung des Systemprompts 14 für den folgenden Dialogschritt zugeführt. So wird beispielsweise der Emotionsindikator in der Regel beim Vorliegen einer semantischen Entsprechung zur Grammatik 9 reduziert und bei der Feststellung einer Entsprechung zur Grammatik 10 gegebenenfalls verstärkt werden.

In der Anwendung für ein automatisches Sprachdialogsystem sind auf der Grundlage des mit Hilfe des erfindungsgemäßen Verfahrens ermittelten Emotionsindikators EmoScore beispielsweise folgende diskrete Gestaltungsmöglichkeiten hinsichtlich einer Beeinflussung des Dialogablaufs in Abhängigkeit vom Grad der emotionalen Erregung des Benutzers denkbar.

Im "schwach emotionalen" Zustand des Anrufers werden zunächst Höflichkeitsstrategien eingesetzt, um einer weiteren, emotionalen Erregung des Anrufers entgegenzuwirken. Es wird dabei zwischen positiver und negativer Höflichkeit unterschieden. Positive Höflichkeit zielt darauf ab, das individuelle Anliegen des Anrufers als positiv zu bewerten, sich mit seinem Anliegen zu identifizieren und Gemeinsamkeiten hervorzuheben. Mit negativer Höflichkeit wird das Ziel verfolgt, den Gesprächspartner von Druck und Zwängen zu befreien. Im Gespräch darauf hinzuweisen, dass die Entscheidung letztendlich beim Gesprächspartner liegt, ist ein Beispiel für eine negative Höflichkeitsstrategie. Die negative Höflichkeit kann als weitere Eskalationsstufe zur positiven Höflichkeit eingesetzt werden, wenn der "schwach emotionale" Zustand des Anrufers durch Anwendung der positiven Höflichkeit nicht in einen "nicht emotionalen" Zustand gewandelt werden konnte.

Wird eine "emotionale" Erregung beim Anrufer detektiert, so antwortet das Dialogsystem je nach Applikationsumfeld mit Motivations- und Deeskalationsstrategien. Hierbei wird der Dialog unterbrochen, um einen Prompt zur Motivation des Anrufers oder zur Deeskalation einzuspielen. Danach wird mit dem letzten Dialogschritt fortgefahren.

Motivations-Strategien eignen sich insbesondere bei langwierigen Dialogen, also beispielsweise bei Formularabfragen mit bis zu 10 oder mehr Fragen. Sinn der Strategie ist es, den Anrufer über den Dialogfortschritt zu informieren und zum Weitermachen zu motivieren. Als Eingangsparameter für ein dem jeweiligen Status angepasstes Prompting dienen sowohl der Statusparameter "Motivation" als auch der Parameter "Dialogfortschritt".

Für Applikationen aus dem Bereich Custumer Care Automation von besonderer Bedeutung sind Deeskalationsstrategien, die bei Geschäftsprozessen wie beispielsweise Reklamationen oder Rechnungsabfragen die Emotionen des Anrufers auswerten und im Falle einer detektierten, emotionalen Erregung des Anrufers Prompts zur Beruhigung des Anrufers einspielen.

Zur Deeskalation kann auch beitragen, wenn dem Anrufer zusätzliche Informationen zu dem Thema angeboten werden. Wenn beispielsweise detaillierte Informationen zu einem überhöhten Rechnungsposten vorliegen, so kann zur Beruhigung des Anrufers beigetragen werden, indem ihm ausführlichere Informationen zum Rechnungsposten angeboten werden. Der Anrufer kann wählen, ob er sich die ausführlicheren Informationen anhören oder das Gespräch fortsetzen möchte.

Wird eine "starke emotionale" Erregung beim Anrufer detektiert, so wird der Dialog wiederum unterbrochen und der Anrufer gefragt, ob er für sein Anliegen lieber mit einem Agenten verbunden werden möchte. Bei Zustimmung erfolgt die Weitervermittlung zum Agenten, bei Ablehnung wird mit dem letzten Dialogschritt fortgefahren.

Liste der verwendeten Bezugszeichen

1   Emotionserkenner
2   Sprachanalyseeinheit bzw. -modul
3   Verknüpfungslogik bzw. Logik
4   Speicher
5   Vorverarbeitung(seinheit)
6   Merkmalsextraktion
7   Wörterbuch
8   (Datenbank) akustische Modelle
9   Grammatik
10  Grammatik
11  Vergleichereinheit
12  Schwellwertvergleicher
13  Steuerung

14    Systemprompt
15    Spracheingabe

**Patentansprüche**

1.  Verfahren zur Bewertung des emotionalen Zustands einer Person anhand sprachlicher Äußerungen der betreffenden Person, bei welchem das Sprachsignal einem Emotionserkenner zugeführt und durch diesen aufgrund prosodischer Merkmale klassifiziert wird, wobei für das jeweilige Sprachsignal ein emotionaler Status festgelegt wird, der einem Wert innerhalb eines für die prosodische Klassifizierung festgelegten Wertebereichs entspricht, **dadurch gekennzeichnet, dass** das Sprachsignal parallel zu seiner Verarbeitung im Emotionserkenner einer Spracherkennungseinheit zugeführt wird, in welcher, nach einer Signalvorverarbeitung und einer Merkmalsextraktion, eine semantische Sprachanalyse erfolgt, deren Ergebnis ein ein- oder mehrkanaliger Ausdruck ist, der einen semantischen Status des Sprachsignals beschreibt und der einen Kanal umfasst, welcher den Inhalt einer semantischen Entsprechung des Sprachsignals in Bezug auf eine an emotionalen Formulierungen orientierte Grammatik beschreibt und mit dem für das gleiche Sprachsignal festgelegten emotionalen Status unter Einbeziehung eines ersten Gewichtskoeffizienten $g_1$ in einer Logik zu einem den emotionalen Zustand der Person repräsentierenden Emotionsindikator verknüpft wird.

2.  Verfahren nach Anspruch 1, **dadurch gekennzeichnet, dass** neben der an emotionalen Formulierungen orientierten Grammatik eine anwendungsspezifische Grammatik in die Sprachanalyse einbezogen wird, so dass im Ergebnis der Sprachanalyse ein mehrkanaliger Ausdruck für den semantischen Status des Sprachsignals erhalten wird, der mindestens einen Kanal umfasst, welcher den Inhalt einer semantischen Entsprechung des Sprachsignals in Bezug auf diese anwendungsspezifische, aber emotionsunabhängige Grammatik beschreibt und ebenfalls in die Verknüpfung mit dem im Ergebnis der prosodischen Klassifizierung gewonnenen emotionalen Status einbezogen wird.

3.  Verfahren nach Anspruch 2, in der Umsetzung für ein automatisches Sprachdialogsystem, **dadurch gekennzeichnet, dass** bei der Bildung des Emotionsindikators der bisherige Verlauf eines geführten Dialogs einbezogen wird, indem der Emotionsindikator für den aktuellen Dialogschritt mit dem, durch die Einbeziehung eines zweiten Gewichtskoeffizienten $g_2$ gedämpften Emotionsindikator des vorhergehenden Dialogschritts verknüpft wird.

4.  Verfahren nach einem der Ansprüche 1 bis 3, **dadurch gekennzeichnet, dass** der im Emotionserkenner für den emotionalen Status festgelegte Wert, die in den einzelnen Kanälen als Ergebnis der Sprachanalyse an die Verknüpfungseinheit übergebenen Werte sowie die Gewichtskoeffizienten jeweils einen Wert zwischen 0 und 1 annehmen.

5.  Verfahren nach einem der Ansprüche 1 bis 4, **dadurch gekennzeichnet, dass** der Emotionsindikator durch einen Schwellwertvergleich diskretisiert wird.

6.  Verfahren nach Anspruch 5, **dadurch gekennzeichnet dass** im Zuge der Diskretisierung ein Emotionsindikator gebildet wird, durch welchen hinsichtlich des emotionalen Zustands einer bewerteten Person zwischen den 4 Zuständen "nicht emotional", schwach emotional", "emotional" und "stark emotional" unterschieden wird.

7.  Verfahren nach einem der Ansprüche 1 bis 6, **dadurch gekennzeichnet, dass** die Sprachanalyse durch Einbeziehung akustischer Modelle, eines Wörterbuchs sowie der anwendungsspezifischen Grammatik und der an emotionalen Formulierungen orientierten Grammatik erfolgt.

8.  Anordnung zur Bewertung des emotionalen Zustands einer Person anhand sprachlicher Äußerungen der betreffenden Person, welche Teil eines hard-und/oder softwarebasierten Systems ist und zumindest einen Emotionserkenner (1) umfasst, in dem das zu bewertende Sprachsignal auf der Basis einer prosodischen Analyse klassifiziert wird, **dadurch gekennzeichnet, dass** parallel zu dem Emotionserkenner (1) mindestens eine Sprachanalyseeinheit (2) angeordnet ist, welche zur Sprachanalyse sowohl auf eine Datenbank mit einer anwendungsbezogenen Grammatik (9) als auch auf eine Datenbank mit einer an emotionalen Formulierungen orientierten Grammatik 10 zugreift, und dass der Parallelschaltung aus Emotionserkenner (1) und Sprachanalyseeinheit (2) eine Verknüpfungslogik (3) nachgeschaltet ist, in welcher die Ergebnisse des Emotionserkenners (1) und der Sprachanalyseeinheit (2) zu einem den emotionalen Zustand der Person repräsentierenden Emotionsindikator verknüpft werden.

9.  Anordnung nach Anspruch 8, **dadurch gekennzeichnet, dass** der Logik ein Schwellwertvergleicher (12) zur Diskretisierung des aus der Verknüpfung der Ergebnisse des Emotionserkenners (1) und der Sprachanalyseeinheit (2) erhaltenen Emotionsindikators umfasst.

10. Anordnung nach Anspruch 9, als Teil eines automatischen Sprachdialogsystems mit Einheiten zur Spracheingabe (15) und zur Ausgabe eines Systemprompts (14), **dadurch gekennzeichnet, dass** die Einheit oder Einheiten zur Ausgabe des Systemprompts (14) mittels einer Steuereinheit (13) auch in Abhängigkeit des durch die Anordnung für einen Benutzer erkannten emotionalen Zustands angesteuert werden.

11. Anordnung nach Anspruch 10, **dadurch gekennzeichnet, dass** diese eine Speichereinheit (4) zur Speicherung eines in einem oder mehreren vorhergehenden Dialogschritten gewonnenen Emotionsindikators umfasst, wobei zwischen der Speichereinheit (4) und der Logik (3) eine die Einbeziehung des Inhalts dieses Speichers (4) in die Verknüpfung zwischen den Ergebnissen des Emotionserkenners (1) und der Sprachanalyse-einheit (2) ermöglichende Wirkverbindung besteht.

12. Anordnung nach einem der Ansprüche 8 bis 11, **dadurch gekennzeichnet, dass** die Sprachanalyseeinheit (2) Datenbanken, in denen akustische Modelle (8), mindestens ein Wörterbuch (7), eine anwendungsspezifische Grammatik (9) und eine an emotionalen Formulierungen orientierte Grammatik (10) hinterlegt sind, sowie einen Vergleicher (11) umfasst.

Fig. 1